# EUROPEAN PATENT SPECIFICATION

(11) **EP 4 446 624 B1**
(45) Date of publication and mention of the grant of the patent: **30.09.2026**
(21) Application number: 24170344.6
(22) Date of filing: 15.04.2024
(51) Int. Cl.: F16J 9/14, F01D 11/00, F16J 9/24

(54) **PISTON RING WITH INTEGRATED ANTI-ROTATION FEATURE**
KOLBENRING MIT INTEGRIERTER VERDREHSICHERUNG
SEGMENT DE PISTON AVEC ÉLÉMENT ANTI-ROTATION INTÉGRÉ

(30) Priority: 14.04.2023 US 202363459528 P
(43) Date of publication of application: 16.10.2024
(73) Proprietor: PRATT & WHITNEY CANADA CORP., Longueuil, Québec J4G 1A1 (CA)
(72) Inventor: KASSAB, Rabih, (01BE5) Longueuil, J4G 1A1 (CA)
(74) Representative: Dehns

(56) References cited:
- EP-A1- 3 211 277
- GB-A- 441 224
- JP-U- S6 117 487

## Description

### BACKGROUND

This present invention relates to a piston ring for use in a gas turbine engine. More particularly, a piston ring with an integrated anti-rotation feature.

Piston rings are used in gas turbine engines to create an air seal barrier between different cavities where air pressure gradient needs to be maintained between them. The piston rings are received within grooves and are maintained in place by friction at axial and radial interfaces. Many factors play a role in opposite of the frictional forces and try to move the piston ring the groove in all directions (radially, axially and circumferentially), which may be due to vibrations and pressure fluctuations. Spinning or circumferential movement of the piston ring in the groove may damage piston ring and/or the components that are being sealed by the piston ring.

As such, it is desirable to prevent spinning or circumferential movement of a piston ring in a gas turbine engine.

JP S61 17487 U discloses a piston ring with a piston ring groove.

GB 441,224 A discloses improvements relating to packing rings for engines.

EP 3,211,277 A1 discloses a method and device for piston seal anti-rotation according to the preamble of claim 1.

### BRIEF DESCRIPTION

According to an aspect of the present invention, there is a piston ring for use with a gas turbine engine, in accordance with claim 1.

Optionally, and in accordance with the above, wherein the anti-rotating feature is located at one of the overlapping free ends such that an axial thickness of the one of the overlapping free ends is greater than the rectangular cross section of the circular body.

Optionally, and in accordance with any of the above, the axial surface of the circular body is opposite to an axial side of the piston ring that provides an axial sealing interface.

Optionally, and in accordance with any of the above, one of the plurality of anti-rotating features is located at one of the overlapping free ends.

Optionally, and in accordance with any of the above, the axial surface of the circular body is opposite to an axial side of the piston ring that provides an axial sealing interface.

According to another aspect of the present invention, there is a seal assembly for use in a gas turbine engine, in accordance with claim 4.

Optionally, and in accordance with any of the above, the slot extends from or up to an upper surface of the non-seal side rail so that the anti-rotating feature can be received in a radial direction in the slot as the piston ring is radially inserted to the groove and the slot is configured to allow for thermal expansion of the piston ring.

Optionally, and in accordance with any of the above, the anti-rotating feature is located at one of the overlapping free ends such that an axial thickness of the one of the overlapping free ends is greater than the rectangular cross section of the circular body.

Optionally, and in accordance with any of the above, the axial surface of the circular body is opposite to an axial side of the piston ring that provides an axial sealing interface with the seal side rail and a combined axial thickness of the piston ring and anti-rotating feature is greater than or equal to a combined axial thickness of the groove and the slot.

Optionally, and in accordance with any of the above, one of the plurality of anti-rotating features is located at one of the overlapping free ends.

Optionally, and in accordance with any of the above, the axial surface of the circular body is opposite to an axial side of the piston ring that provides an axial sealing interface with the seal side rail.

Optionally, and in accordance with any of the above, the first inner cylindrical component is a bearing housing cover and the second outer cylindrical component is a housing slid over the piston ring.

Optionally, and in accordance with any of the above, the first inner cylindrical component is a bearing housing cover and the second outer cylindrical component is a housing slid over the piston ring.

According to another aspect of the present invention, there is a method for providing a seal in a gas turbine engine, in accordance with claim 9.

Optionally, and in accordance with any of the above, the slot extends from or up to an upper surface of the non-seal side rail so that the anti-rotating feature can be received in a radial direction in the slot as the piston ring is radially inserted to the groove.

Optionally, and in accordance with any of the above, one of the plurality of anti-rotating features (100) is located at one of the overlapping free ends.

Optionally, and in accordance with any of the above, the axial surface of the circular body is opposite to an axial side of the piston ring that provides an axial sealing interface with the seal side rail.

### BRIEF DESCRIPTION OF THE DRAWINGS

The following descriptions should not be considered limiting in any way. With reference to the accompanying drawings, like elements are numbered alike:
FIG. 1 is a schematic, partial cross-sectional view of a gas turbine engine in accordance with this invention;
FIG. 2 schematically illustrates a portion of a mid-turbine frame of a gas turbine engine;
FIG. 3 is perspective view of a piston ring configured for use with a gas turbine engine;
FIG. 3A is an enlarged portion of the piston ring illustrated in FIG. 3;
FIG. 4 is a cross-sectional view of a seal formed by a piston ring located between a first inner cylindrical component and a second outer cylindrical component;
FIG. 5 is a perspective view of a portion of a piston ring located between within a cylindrical component in accordance with the present invention;
FIG. 6 is another perspective view of a portion of a piston ring located between within a cylindrical component in accordance with the present invention;
FIG. 7 is yet another perspective view of a portion of a piston ring located between within a cylindrical component in accordance with the present invention; and
FIG. 8 is a partial cross-sectional perspective view of a piston ring located between a first inner cylindrical component and a second outer cylindrical component.

### DETAILED DESCRIPTION

A detailed description of one or more embodiments of the disclosed apparatus and method are presented herein by way of exemplification and not limitation with reference to the FIGS.

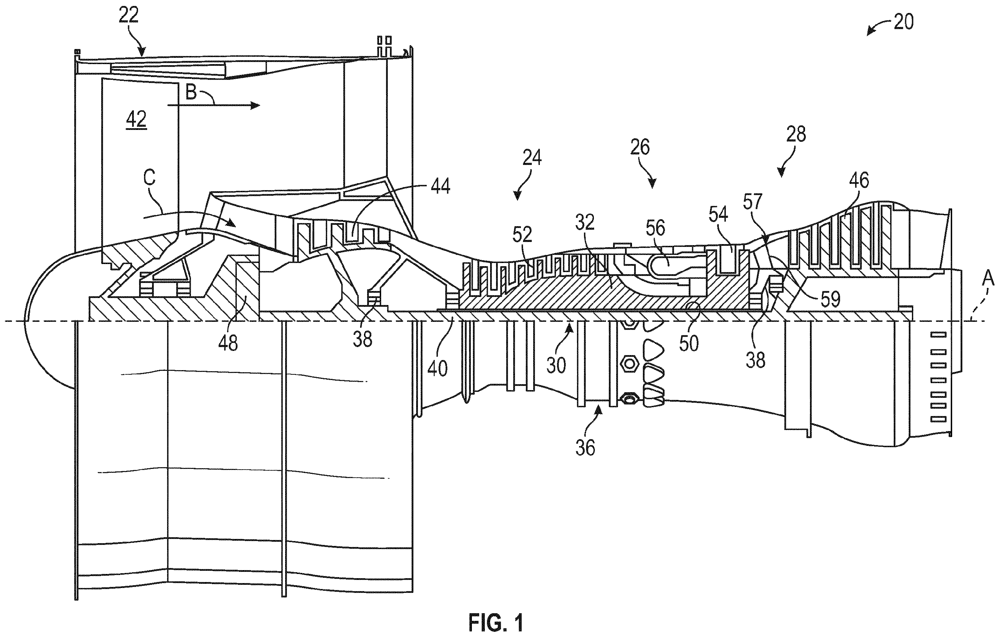

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first or low pressure compressor 44 and a first or low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second or high pressure compressor 52 and a second or high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 illustrated in FIG. 1 is merely exemplary and the present invention is contemplated for use with any type of engine or any other gas turbine engine including those that do not have a gear system 48 (e.g. a non-geared turbofan engine).

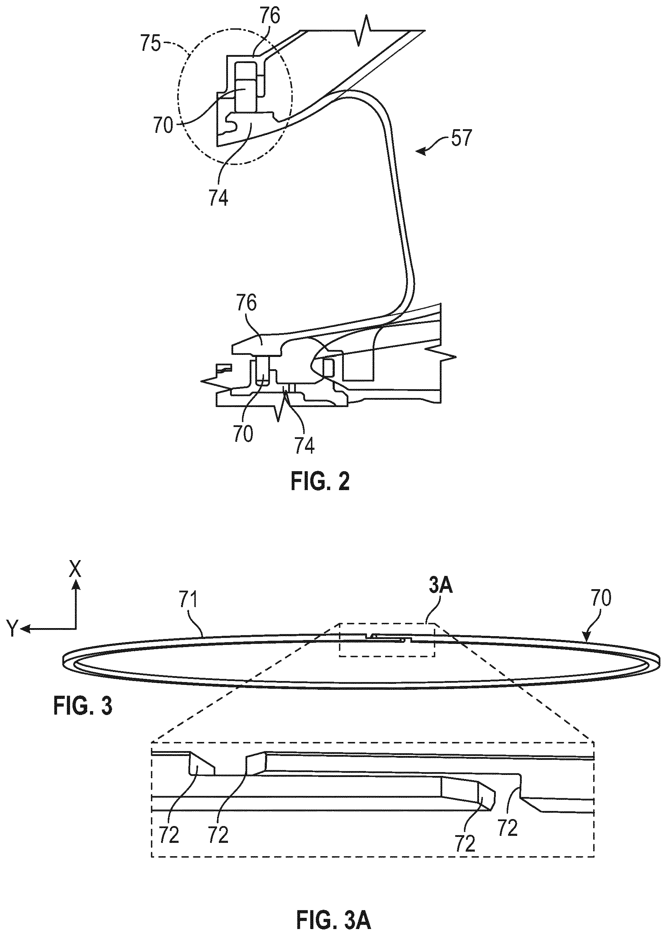

Referring now to FIG. 2 a portion of the mid-turbine frame 57 is illustrated. As illustrated, a piston ring 70 is used to an air seal barrier between different cavities where air pressure gradient needs to be maintained between them. Piston rings are used in turbines to create the aforementioned air seal barriers, although it is understood that the piston ring configuration of the present invention may be used in other locations of the engine where the aforementioned air seal barriers are required.

Referring now to at least FIGS. 1-3, the piston ring 70 has a circular configuration or body 71 with open ends 72 and a rectangular cross section. As illustrated, the ends 72 are overlapping to provide better sealing capability.

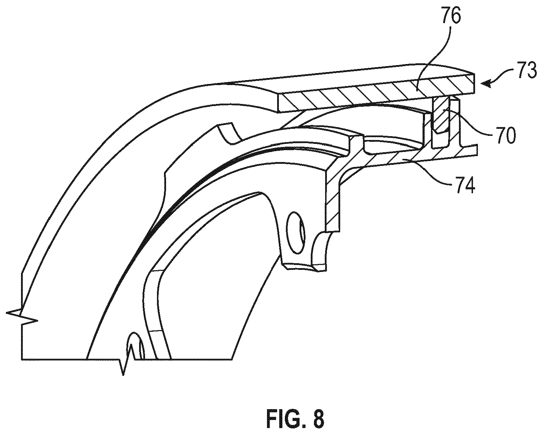

The piston rings 70 are installed between two concentric cylindrical portions of two components. For example, a first inner cylindrical component 74 surrounded by a second outer cylindrical component 76. As used herein the first inner cylindrical component 74 is radially inward of the second outer cylindrical component 76. As used herein, the first inner cylindrical component 74, the second outer cylindrical component 76, and the piston ring 70 may be referred to as a seal assembly 73. See at least FIG. 8. In one non-limiting embodiment, the first inner cylindrical component 74 may be a bearing housing cover and the second outer cylindrical component 76 may be a housing slid over the piston ring 70.

Referring now to at least FIGS. 1-4, one of the first inner cylindrical component 74 and the second outer cylindrical component 76 contains a groove 78 to contain the piston ring 70 and the other of the first inner cylindrical component 74 and the second outer cylindrical component 76 contains a smooth surface 80 for contact with the piston ring 70. The groove 78 is defined by a seal side wall or a seal side rail 82 that extends radially away from a surface 84 of the first inner cylindrical component 74 or alternatively surface 80 the second outer cylindrical component 76 and a non-seal side wall or a non-seal side rail 86 that extends radially away from the surface 84 of the first inner cylindrical component 74 or alternatively the surface 80 of the second outer cylindrical component 76. As illustrated, the seal side wall or seal side rail 82 and the non-seal side wall or non-seal rail 86 are in a facing spaced relationship so that the piston ring 70 can be received therebetween. The area 75 in FIG. 2 illustrates the configuration where the groove 78 is defined by a seal side wall or a seal side rail 82 and a non-seal side wall or a non-seal side rail 86 that extend radially away from the surface 80 of the second outer cylindrical component 76.

The piston ring 70 provides two sealing interfaces: an axial sealing interface 88 between an axial side 90 of the piston ring 70 with a surface of the seal side wall or seal side rail 82 at a lower pressure side 92 of the seal provided by the piston ring 70 and a radial interface 94. The radial interface 94 is provided by an outer radius or outer radial surface 96 of the piston ring 70 when the groove 78 is located on the first inner cylindrical component 74. Alternatively, the radial interface 94 is provided by an inner radius or inner radial surface 98 of the piston ring 70 when the groove 78 is located on the second outer cylindrical component 76.

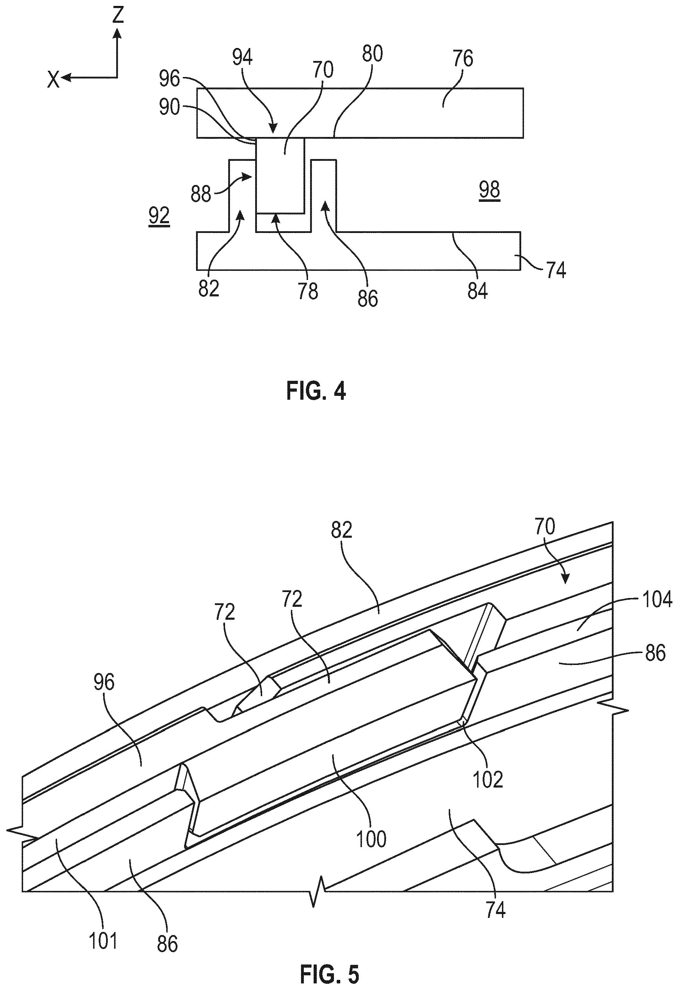

As used herein, axial (X), circumferential (Y) and radial (Z) refer to the directions illustrated in at least FIGS. 3 and 4. Also, radial directions (Z) may be referred to as distances with respect to the engine axis A illustrated in FIG. 1 and circumferential (Y) directions may be referred to as circular directions about the engine axis A illustrated in FIG. 1 or the circumferential direction of the piston ring 70.

The sealing provided by the piston ring 70 with the axial interface 88 is achieved by the pressure gradient between the lower pressure side 92 with respect to a higher pressure side 98 keeping the two faces of the piston ring 70 and the seal side rail or wall 82 together at the axial interface 88.

The sealing provided by the piston ring 70 with the radial interface 94 is achieved by the pressure created by the piston ring spring effect: e.g., in tension for inner sealing interface and in compression for outer sealing interface. In other words, the piston ring 70 is compressed prior to being inserted into the groove 78 illustrated in at least FIG. 4 and the piston ring 70 is expanded prior to being inserted into the groove 78 if it was provided on the second outer cylindrical component 76.

As such, the piston ring 70 is maintained in place by friction at the axial and radial interfaces. However, many factors play a role in opposite of the frictional forces and try to move the piston ring in the groove in all directions (radially, axially and circumferentially), most importantly vibrations and pressure fluctuations.

The moving piston ring creates fretting and surfaces damages as well as spinning of the piston ring in the groove 78.

Referring now to at least FIGS. 5-8 and in accordance with the present invention, the piston ring 70 is provided with an anti-rotating component or feature 100 to prevent the spinning of the piston ring 70. The anti-rotating component or feature 100 extends from an axial side 101 of the piston ring 70 that is opposite to an axial side of the piston ring 70 that provides the axial interface 88. The anti-rotating component or feature 100 is configured to be received within an anti-rotating slot or slot 102 formed in the non-seal side rail or non-seal side wall 86 forming groove 78. Since the anti-rotating component or feature 100 extends from the axial side 101 of the piston ring 70, side walls of the anti-rotating component or feature 100 will contact side walls of the anti-rotating slot 102 in order to prevent circumferential movement or spinning of the piston ring 70 when it is received within the groove 78 and the anti-rotating component or feature 100 is received within an anti-rotating slot 102. In other words, an axial thickness of the piston ring 70 where the anti-rotating component or feature 100 is located is greater than an axial thickness of the groove 78 between the seal side wall or the seal side rail 82 and the non-seal side wall or the non-seal side rail 86. In other words, the anti-rotating component or feature 100 must be received within the anti-rotating slot 102 in order to place the piston ring 70 in the groove 78. In yet another non-limiting embodiment, the axial thickness of the piston ring 70 where the anti-rotating component or feature 100 is located is greater than or equal to an axial thickness of the groove 78 between the seal side wall or the seal side rail 82 and the non-seal side wall or the non-seal side rail 86 plus the axial thickness of the anti-rotating slot 102 or the axial thickness of the non-seal side wall or the non-seal side rail 86. In other words, and in this non-limiting embodiment, the axial thickness of the piston ring 70 where the anti-rotating component or feature 100 is located is at least the same as the axial thickness of the groove 78 and the axial thickness of the anti-rotating slot 102.

The anti-rotating slot 102 extends from or up to an upper surface 104 of the non-seal side rail or non-seal side wall 86 so that the anti-rotating component or feature 100 can be received in the radial direction in the anti-rotating slot 102 as the piston ring 70 is radially inserted to the groove 78. In other words, the anti-rotating slot 102 is open at the top and no material of the non-seal side rail or non-seal side wall 86 extends over the top of the anti-rotating slot 102.

In one embodiment and as illustrated in at least FIG. 5, the anti-rotating component or feature 100 is located proximate to the distal end of one of the overlapping ends 72 of the piston ring 70. The anti-rotating component or feature 100 is integrally formed with the piston ring 70 such that it and the piston ring 70 are formed as a single component. In other words, the anti-rotating component or feature 100 is formed as a single piece with the piston ring 70. In one non-limiting embodiment, the anti-rotating component or feature 100 is formed by reducing the axial thickness of the piston ring 70 but leaving the material behind that will comprise the anti-rotating component or feature 100. As such, the anti-rotating component or feature 100 is an integral portion of the piston ring (e.g., formed as a single unitary component). In one embodiment, the size of the slot or the anti-rotating slot 102 is large enough to allow for the required thermal expansion and/or contraction and eccentricity of the piston ring 70 between the first inner cylindrical component 74 and the second outer cylindrical component 76 as well as any thermal expansions and contractions of the first inner cylindrical component 74 and the second outer cylindrical component 76 during operation of the engine 20 (e.g., heating and cooling of the engine 20) so that the anti-rotating component or feature 100 can operate as intended. For example, if the piston ring 70 is formed from a different material than the first inner cylindrical component 74 and the second outer cylindrical component 76, their respective coefficients of expansion and contraction may be different. As such, the slot or the anti-rotating slot 102 should be configured to accommodate for the required thermal expansion and eccentricity between the first inner cylindrical component 74 and second outer cylindrical component 76 as well as the piston ring 70 during engine operation. In other words, the size of the slot or the anti-rotating slot 102 should be large enough to allow for the required thermal expansion and eccentricity between the inner component and outer component as well as the piston ring 70 during operation.

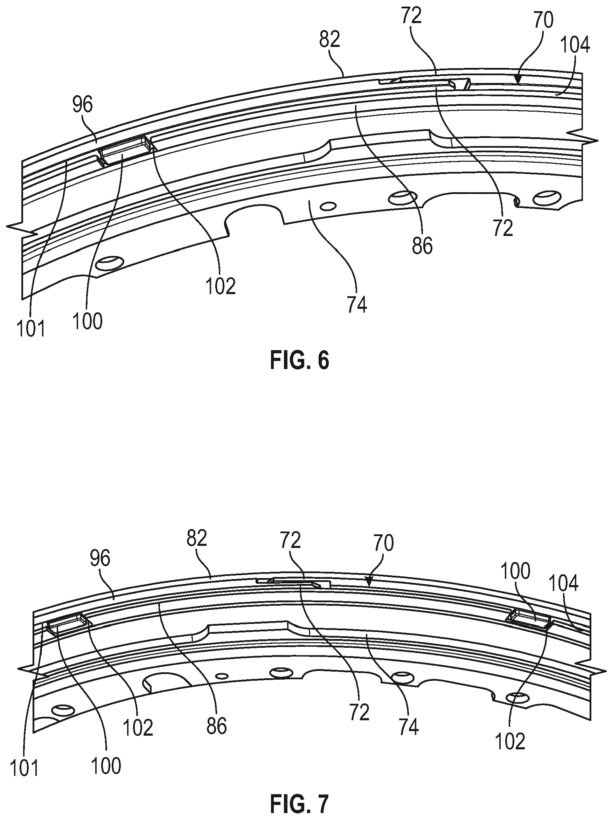

The piston ring 70 comprises a plurality of anti-rotating components or features 100 that are received within corresponding anti-rotating slots 102. See at least FIGS. 6 and 7. In addition and as illustrated in at least FIG. 6, the anti-rotating component or feature 100 need not be located at one of the distal ends of the piston ring 70. In another alternative, one at least one or more than one anti-rotating component or feature 100 can be positioned on one side or on opposite sides about the overlap of the piston ring ends 72. In yet another alternative, the anti-rotating component or feature 100 or at least one of the anti-rotating components or features 100 can be located approximately ½ way between the piston ring ends 72.

Alternatively, one anti-rotating component or feature 100 is located at the overlap of the piston ring ends 72 and at least one other anti-rotating component or feature 100 is located away from the overlap of the piston ring ends 72.

FIG. 8 is a partial cross-sectional perspective view of a piston ring 70 located between the first inner cylindrical component 74 and the second outer cylindrical component 76.

In accordance with the present invention, the piston ring 70 is configured to include at least one anti-rotating component or feature 100 extending from and integrated with the piston ring 70 to prevent its spinning in the groove 78 and reduce damage to the piston ring 70 and of the sealed components (e.g., the first inner cylindrical component 74 and/or the second outer cylindrical component 76).

As mentioned above, according to the invention the piston ring 70 is configured with multiple anti-rotating components or features 100. One of the anti-rotating components or features 100 may be located at the overlapping features of the piston ring 70 to strengthen thinner regions of the piston ring 70 at the overlap.

In addition, and by providing an anti-rotating slot 102 that extends from or up to an upper surface 104 of the non-seal side rail or non-seal side wall 86, stresses at the interface between the non-seal side rail or non-seal side wall 86 and the anti-rotating component or feature 100 are reduced as the radial top of the anti-rotating slot 102 is open.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made without departing from the scope of the present invention. In addition, many modifications may be made to adapt a particular situation or material to the teachings of the present invention without departing from the essential scope thereof. Therefore, it is intended that the present invention not be limited to the particular embodiment disclosed as the best mode contemplated for carrying out this present invention, but that the present invention will include all embodiments falling within the scope of the claims.

## Claims

1. A piston ring (70) for a gas turbine engine (20), the piston ring (70) comprising:
a circular body (71) having a rectangular cross section with overlapping open free ends (72); and
an anti-rotating feature (100) extending from an axial surface (101) of the circular body (71),
**characterised by**
the anti-rotating feature (100) being integrally formed with the circular body (71) such that the circular body (71) and the anti-rotating feature (100) are formed from a single unitary member,
wherein
the anti-rotating feature (100) is a plurality of anti-rotating features (100) extending from the axial surface (101) of the circular body (71).

2. The piston ring (70) of claim 1, wherein the axial surface (101) of the circular body (71) is opposite to an axial side (90) of the piston ring (70) that provides an axial sealing interface (88).

3. The piston ring (70) of claim 1 or 2, wherein one of the plurality of anti-rotating features (100) is located at one of the overlapping free ends (72).

4. A seal assembly (73) for use in a gas turbine engine (20), the seal assembly (73) comprising:
a first inner cylindrical component (74);
a second outer cylindrical component (76);
a groove (78) located in the first inner cylindrical component (74) or the second outer cylindrical component (76), the groove (78) defined by a seal side rail (82) that extends radially away from a surface (84) of the first inner cylindrical component (74) or a surface (80) of the second outer cylindrical component (76) and a non-seal side rail (86) that extends radially away from the surface (84) of the first inner cylindrical component (74) or the surface (80) of the second outer cylindrical component (76), the seal side rail (82) and the non-seal rail (86) being in a facing spaced relationship; and
the piston ring (70) of any preceding claim located in the groove (78) between the first inner cylindrical component (74) and the second outer cylindrical component (76), the piston ring (70) being located between the seal side rail (82) and the non-seal side rail (86), wherein an anti-rotating feature (100) of the plurality of anti-rotating features (100) is received within a slot (102) formed in the non-seal side rail (86) and contact between the anti-rotating feature (100) and the slot (102) prevents circumferential movement of the piston ring (70) in the groove (78).

5. The seal assembly (73) of claim 4, wherein the slot (102) extends from or up to an upper surface (104) of the non-seal side rail (86) so that the respective anti-rotating feature (100) can be received in a radial direction in the slot (102) as the piston ring (70) is radially inserted to the groove (78) and the slot (102) is configured to allow for thermal expansion of the piston ring (70).

6. The seal assembly (73) of claim 4 or 5, as dependent on claim 2, wherein a combined axial thickness of the piston ring (70) and anti-rotating feature (100) is greater than or equal to a combined axial thickness of the groove (78) and the slot (102).

7. The seal assembly (73) of any of claims 4 to 6, wherein the slot (102) is a plurality of slots formed in the non-seal side rail (86) and each of the plurality of anti-rotating features (100) are received within a respective one of the plurality of slots formed in the non-seal side rail (86).

8. The seal assembly (73) of any of claims 4 to 7, wherein the first inner cylindrical component (74) is a bearing housing cover and the second outer cylindrical component (76) is a housing slid over the piston ring (70).

9. A method for providing a seal in a gas turbine engine (20), comprising:
inserting a piston ring (70) between a first inner cylindrical component (74) and a second outer cylindrical component (76), the piston ring (70) having a circular body (71) with a rectangular cross section with overlapping open free ends (72), and an anti-rotating feature (100) extending from an axial surface (101) of the circular body (71), the anti-rotating feature (100) being integrally formed with the circular body (71) such that the circular body (71) and the anti-rotating feature (100) are formed from a single unitary member, wherein a groove (78) is located in the first inner cylindrical component (74) or the second outer cylindrical component (76), the groove (78) defined by a seal side rail (82) that extends radially away from a surface (84) of the first inner cylindrical component (74) or a surface (80) of the second outer cylindrical component (76) and a non-seal side rail (86) that extends radially away from the surface (84) of the first inner cylindrical component (74) or the surface (80) of the second outer cylindrical component (76), the seal side rail (82) and the non-seal rail (86) being in a facing spaced relationship; and
preventing circumferential movement of the piston ring (70) within the groove (78) by locating the anti-rotating feature (100) within a slot (102) formed in the non-seal side rail (86) such that contact between the anti-rotating feature (100) and the slot (102) prevents circumferential movement of the piston ring (70) in the groove (78),
**characterised in that**:
the anti-rotating feature (100) is a plurality of anti-rotating features (100) extending from the axial surface (101) of the circular body (71) and the slot (102) is a plurality of slots (102) formed in the non-seal side rail (86), each of the plurality of anti-rotating features (100) being received within a respective one of the plurality of slots (102) formed in the non-seal side rail (86).

10. The method of claim 9, wherein the plurality of slots (102) extend from or up to an upper surface (104) of the non-seal side rail (86) so that each anti-rotating feature (100) can be received in a radial direction in the respective slot (102) as the piston ring (70) is radially inserted to the groove (78).

11. The method of claim 9 or 10, wherein one of the plurality of anti-rotating features (100) is located at one of the overlapping free ends (72).

12. The method of any of claims 9 to 11, wherein the axial surface (101) of the circular body (71) is opposite to an axial side (90) of the piston ring (70) that provides an axial sealing interface (88) with the seal side rail (82).

## Patentansprüche

1. Kolbenring (70) für einen Gasturbinenmotor (20), wobei der Kolbenring (70) umfasst:
einen Kreiskörper (71), der einen Rechteckquerschnitt mit überlappenden offenen freien Enden (72) aufweist; und
ein Verdrehsicherungsmerkmal (100), das sich von einer Axialfläche (101) des Kreiskörpers (71) erstreckt, **dadurch gekennzeichnet, dass** das Verdrehsicherungsmerkmal (100) einstückig mit dem Kreiskörper (71) ausgebildet ist, sodass der Kreiskörper (71) und das Verdrehsicherungsmerkmal (100) aus einem einzelnen einstückigen Bauteil gebildet sind, wobei
das Verdrehsicherungsmerkmal (100) eine Mehrzahl von Verdrehsicherungsmerkmalen (100) ist, die sich von der Axialfläche (101) des Kreiskörpers (71) erstrecken.

2. Kolbenring (70) nach Anspruch 1, wobei die Axialfläche (101) des Kreiskörpers (71) einer Axialseite (90) des Kolbenrings (70) gegenüberliegt, die eine axiale Dichtschnittstelle (88) bereitstellt.

3. Kolbenring (70) nach Anspruch 1 oder 2, wobei sich eines von der Mehrzahl von Verdrehsicherungsmerkmalen (100) an einem der überlappenden freien Enden (72) befindet.

4. Dichtungsbaugruppe (73) zur Verwendung in einem Gasturbinenmotor (20), wobei die Dichtungsbaugruppe (73) umfasst:
ein erstes inneres zylindrisches Bauteil (74);
ein zweites äußeres zylindrisches Bauteil (76);
eine Nut (78), die sich in dem ersten inneren zylindrischen Bauteil (74) oder dem zweiten äußeren zylindrischen Bauteil (76) befindet, wobei die Nut (78) durch eine Dichtungsseitenschiene (82), die sich radial von einer Oberfläche (84) des ersten inneren zylindrischen Bauteils (74) oder einer Oberfläche (80) des zweiten äußeren zylindrischen Bauteils (76) weg erstreckt,
und eine nichtdichtende Seitenschiene (86), die sich radial von der Oberfläche (84) des ersten inneren zylindrischen Bauteils (74) oder der Oberfläche (80) des zweiten äußeren zylindrischen Bauteils (76) weg erstreckt, definiert ist, wobei die Dichtungsseitenschiene (82) und die nichtdichtende Schiene (86) in einer gegenüberliegenden beabstandeten Anordnung sind; und
den Kolbenring (70) nach einem der vorhergehenden Ansprüche, der sich in der Nut (78) zwischen dem ersten inneren zylindrischen Bauteil (74) und dem zweiten äußeren zylindrischen Bauteil (76) befindet, wobei der Kolbenring (70) zwischen der Dichtungsseitenschiene (82) und der nichtdichtenden Seitenschiene (86) angeordnet ist, wobei ein Verdrehsicherungsmerkmal (100) der Mehrzahl von Verdrehsicherungsmerkmalen (100) in einem Schlitz (102) aufgenommen ist, der in der nichtdichtenden Seitenschiene (86) ausgebildet ist, und ein Kontakt zwischen dem Verdrehsicherungsmerkmal (100) und dem Schlitz (102) eine Umfangsbewegung des Kolbenrings (70) in der Nut (78) verhindert.

5. Dichtungsbaugruppe (73) nach Anspruch 4, wobei sich der Schlitz (102) von einer Oberfläche (104) der nichtdichtenden Seitenschiene (86) oder bis zu dieser erstreckt, sodass das jeweilige Verdrehsicherungsmerkmal (100) in einer Radialrichtung in dem Schlitz (102) aufgenommen werden kann, wenn der Kolbenring (70) radial in die Nut (78) eingesetzt wird, und der Schlitz (102) ausgelegt ist, eine Wärmedehnung des Kolbenrings (70) zu ermöglichen.

6. Dichtungsbaugruppe (73) nach Anspruch 4 oder 5, soweit auf Anspruch 2 rückbezogen, wobei eine kombinierte axiale Dicke des Kolbenrings (70) und des Verdrehsicherungsmerkmals (100) größer als oder gleich einer kombinierten axialen Dicke der Nut (78) und des Schlitzes (102) ist.

7. Dichtungsbaugruppe (73) nach einem der Ansprüche 4 bis 6, wobei der Schlitz (102) eine Mehrzahl von Schlitzen ist, die in der nichtdichtenden Seitenschiene (86) ausgebildet sind, und jedes der Mehrzahl von Verdrehsicherungsmerkmalen (100) in einem jeweiligen der Mehrzahl von Schlitzen aufgenommen ist, die in der nichtdichtenden Seitenschiene (86) ausgebildet sind.

8. Dichtungsbaugruppe (73) nach einem der Ansprüche 4 bis 7, wobei das erste innere zylindrische Bauteil (74) ein Lagergehäusedeckel ist und das zweite äußere zylindrische Bauteil (76) ein Gehäuse ist, das über den Kolbenring (70) geschoben ist.

9. Verfahren zum Bereitstellen einer Dichtung in einem Gasturbinenmotor (20), umfassend:
Einführen eines Kolbenrings (70) zwischen ein erstes inneres zylindrisches Bauteil (74) und ein zweites äußeres zylindrisches Bauteil (76), wobei der Kolbenring (70) einen Kreiskörper (71) mit einem Rechteckquerschnitt mit überlappenden offenen freien Enden (72) und ein Verdrehsicherungsmerkmal (100) aufweist, das sich von einer Axialfläche (101) des Kreiskörpers (71) erstreckt, wobei das Verdrehsicherungsmerkmal (100) einstückig mit dem Kreiskörper (71) ausgebildet ist, sodass der Kreiskörper (71) und das Verdrehsicherungsmerkmal (100) aus einem einzelnen einstückigen Bauteil gebildet sind, wobei sich eine Nut (78) in dem ersten inneren zylindrischen Bauteil (74) oder dem zweiten äußeren zylindrischen Bauteil (76) befindet, wobei die Nut (78) durch eine Dichtungsseitenschiene (82), die sich radial von einer Oberfläche (84) des ersten inneren zylindrischen Bauteils (74) oder einer Oberfläche (80) des zweiten äußeren zylindrischen Bauteils (76) weg erstreckt, und eine nichtdichtende Seitenschiene (86), die sich radial von der Oberfläche (84) des ersten inneren zylindrischen Bauteils (74) oder der Oberfläche (80) des zweiten äußeren zylindrischen Bauteils (76) weg erstreckt, definiert ist, wobei die Dichtungsseitenschiene (82) und die nichtdichtende Schiene (86) in einer gegenüberliegenden beabstandeten Anordnung sind; und
Verhindern einer Umfangsbewegung des Kolbenrings (70) innerhalb der Nut (78) durch Anordnen des Verdrehsicherungsmerkmals (100) in einem Schlitz (102), der in der nichtdichtenden Seitenschiene (86) ausgebildet ist, sodass ein Kontakt zwischen dem Verdrehsicherungsmerkmal (100) und dem Schlitz (102) eine Umfangsbewegung des Kolbenrings (70) in der Nut (78) verhindert,
**dadurch gekennzeichnet, dass**:
das Verdrehsicherungsmerkmal (100) eine Mehrzahl von Verdrehsicherungsmerkmalen (100) ist, die sich von der Axialfläche (101) des Kreiskörpers (71) erstrecken, und der Schlitz (102) eine Mehrzahl von Schlitzen (102) ist, die in der nichtdichtenden Seitenschiene (86) ausgebildet sind, wobei jedes der Mehrzahl von Verdrehsicherungsmerkmalen (100) in einem jeweiligen der Mehrzahl von Schlitzen (102) aufgenommen ist, die in der nichtdichtenden Seitenschiene (86) ausgebildet sind.

10. Verfahren nach Anspruch 9, wobei sich die Mehrzahl von Schlitzen (102) von einer Oberfläche (104) der nichtdichtenden Seitenschiene (86) oder bis zu dieser erstreckt, sodass jedes Verdrehsicherungsmerkmal (100) in einer Radialrichtung in dem jeweiligen Schlitz (102) aufgenommen werden kann, wenn der Kolbenring (70) radial in die Nut (78) eingesetzt wird.

11. Verfahren nach Anspruch 9 oder 10, wobei sich eines von der Mehrzahl von Verdrehsicherungsmerkmalen (100) an einem der überlappenden freien Enden (72) befindet.

12. Verfahren nach einem der Ansprüche 9 bis 11, wobei die Axialfläche (101) des Kreiskörpers (71) einer Axialseite (90) des Kolbenrings (70) gegenüberliegt, die eine axiale Dichtschnittstelle (88) mit der Dichtungsseitenschiene (82) bereitstellt.

## Revendications

1. Segment de piston (70) pour une turbine à gaz (20), le segment de piston (70) comprenant :
un corps circulaire (71) présentant une section transversale rectangulaire avec des extrémités libres ouvertes chevauchantes (72) ; et
un élément anti-rotation (100) s'étendant depuis une surface axiale (101) du corps circulaire (71), **caractérisé en ce que** l'élément anti-rotation (100) est formé intégralement avec le corps circulaire (71) de sorte que le corps circulaire (71) et
l'élément anti-rotation (100) sont formés d'un élément unitaire unique, dans lequel
l'élément anti-rotation (100) est une pluralité d'éléments anti-rotation (100) s'étendant à partir de la surface axiale (101) du corps circulaire (71).

2. Segment de piston (70) selon la revendication 1, dans lequel la surface axiale (101) du corps circulaire (71) est opposée à un côté axial (90) du segment de piston (70) qui fournit une interface d'étanchéité axiale (88).

3. Segment de piston (70) selon la revendication 1 ou 2, dans lequel l'un de la pluralité de dispositifs anti-rotation (100) est situé à l'une des extrémités libres chevauchantes (72).

4. Ensemble d'étanchéité (73) disposé dans un moteur à turbine à gaz (20), l'ensemble d'étanchéité (73) comprenant :
un premier composant cylindrique intérieur (74) ;
un deuxième composant cylindrique extérieur (76) ;
une rainure (78) située dans le premier composant cylindrique intérieur (74) ou le deuxième composant cylindrique extérieur (76), la rainure (78) étant définie par un rail latéral assurant l'étanchéité (82) qui s'étend radialement à partir d'une surface (84) du premier composant cylindrique intérieur (74) ou d'une surface (80) du deuxième composant cylindrique extérieur (76) et un rail latéral n'assurant pas l'étanchéité (86) qui s'étend radialement à partir de la surface (84) du premier composant cylindrique intérieur (74) ou de la surface (80) du deuxième composant cylindrique extérieur (76), le rail latéral assurant l'étanchéité (82) et le rail latéral n'assurant pas l'étanchéité (86) étant dans une relation d'espacement face à face ; et
le segment de piston (70) selon l'une quelconque des revendications précédentes situé dans la rainure (78) entre le premier composant cylindrique intérieur (74) et le deuxième composant cylindrique extérieur (76), le segment de piston (70) étant situé entre le rail latéral assurant l'étanchéité (82) et le rail latéral n'assurant pas l'étanchéité (86), dans lequel un élément anti-rotation (100) de la pluralité d'éléments anti-rotation (100) est reçu dans une fente (102) formée dans le rail latéral assurant l'étanchéité (86) et le contact entre l'élément anti-rotation (100) et la fente (102) empêche le mouvement circonférentiel du segment de piston (70) dans la rainure (78).

5. Ensemble d'étanchéité (73) selon la revendication 4, dans lequel la fente (102) s'étend depuis ou jusqu'à une surface supérieure (104) du rail latéral n'assurant pas l'étanchéité (86) de sorte que l'élément anti-rotation (100) respectif puisse être reçu dans une direction radiale dans la fente (102) lorsque le segment de piston (70) est inséré radialement dans la rainure (78) et que la fente (102) est configurée pour permettre la dilatation thermique du segment de piston (70).

6. Ensemble d'étanchéité (73) selon la revendication 4 ou 5, dépendant de la revendication 2, dans lequel une épaisseur axiale combinée du segment de piston (70) et de l'élément anti-rotation (100) est supérieure ou égale à une épaisseur axiale combinée de la rainure (78) et de la fente (102).

7. Ensemble d'étanchéité (73) selon l'une quelconque des revendications 4 à 6, dans lequel la fente (102) est une pluralité de fentes formées dans le rail latéral n'assurant pas l'étanchéité (86) et chacun de la pluralité d'éléments anti-rotation (100) est reçu dans une de la pluralité de fentes formées dans le rail latéral n'assurant pas l'étanchéité (86).

8. Ensemble d'étanchéité (73) selon l'une quelconque des revendications 4 à 7, dans lequel le premier composant cylindrique intérieur (74) est un couvercle de logement de palier et le deuxième composant cylindrique extérieur (76) est un logement glissé sur le segment de piston (70).

9. Procédé de fourniture d'un joint dans un moteur à turbine à gaz (20), comprenant :
insertion d'un segment de piston (70) entre un premier composant cylindrique intérieur (74) et un deuxième composant cylindrique extérieur (76), le segment de piston (70) présentant un corps circulaire (71) à section rectangulaire avec des extrémités libres ouvertes chevauchantes (72), et un élément anti-rotation (100) s'étendant depuis une surface axiale (101) du corps circulaire (71), l'élément anti-rotation (100) étant solidaire du corps circulaire (71), de sorte que le corps circulaire (71) et l'élément anti-rotation (100) sont formés à partir d'un élément unitaire unique, une rainure (78) étant située dans le premier composant cylindrique intérieur (74) ou le deuxième composant cylindrique extérieur (76), la rainure (78) étant définie par un rail latéral assurant l'étanchéité (82) s'étendant radialement depuis une surface (84) du premier composant cylindrique intérieur (74) ou une surface (80) du deuxième composant cylindrique extérieur (76), et par un rail latéral n'assurant pas l'étanchéité (86) s'étendant radialement à partir de la surface (84) du premier composant cylindrique intérieur (74) ou de la surface (80) du deuxième composant cylindrique extérieur (76), le rail latéral assurant l'étanchéité (82) et le rail latéral n'assurant pas l'étanchéité (86) étant en relation d'espacement face à face ; et
la prévention du mouvement circonférentiel du segment de piston (70) dans la rainure (78) en plaçant l'élément anti-rotation (100) dans une fente (102) formée dans le rail latéral n'assurant pas l'étanchéité (86) de sorte que le contact entre l'élément anti-rotation (100) et la fente (102) empêche le mouvement circonférentiel du segment de piston (70) dans la gorge (78),
**caractérisé en ce que** :
l'élément anti-rotation (100) est une pluralité d'éléments anti-rotation (100) s'étendant à partir de la surface axiale (101) du corps circulaire (71) et la fente (102) est une pluralité de fentes (102) formées dans le rail latéral n'assurant pas l'étanchéité (86), chacun de la pluralité d'éléments anti-rotation (100) étant reçu dans l'une de la pluralité de fentes (102) formées dans le rail latéral n'assurant pas l'étanchéité (86).

10. Procédé selon la revendication 9, dans lequel la pluralité de fentes (102) s'étend à partir ou jusqu'à une surface supérieure (104) du rail latéral n'assurant pas l'étanchéité (86) de sorte que chaque élément anti-rotation (100) puisse être reçu dans une direction radiale dans la fente (102) respective lorsque le segment de piston (70) est inséré radialement dans la rainure (78).

11. Procédé selon la revendication 9 ou 10, dans lequel l'un de la pluralité d'éléments anti-rotation (100) est situé à l'une des extrémités libres chevauchantes (72).

12. Procédé selon l'une quelconque des revendications 9 à 11, dans lequel la surface axiale (101) du corps circulaire (71) est opposée à un côté axial (90) du segment de piston (70) qui fournit une interface d'étanchéité axiale (88) avec le rail latéral assurant l'étanchéité (82).
